# EUROPÄISCHE PATENTSCHRIFT

(11) **EP 0 536 797 B1**
(45) Veröffentlichungstag und Bekanntmachung des Hinweises auf die Patenterteilung: **15.05.1996**
(21) Anmeldenummer: 92117339.9
(22) Anmeldetag: 09.10.1992
(51) Int. Cl.: B65G 21/06, B65G 21/14

(54) **Fördervorrichtung für den Transport von Produkten unter Feuchtraumbedingungen**
Conveyor device for transporting products under moisture room conditions
Dispositif de convoyeur pour le transport de produits dans des conditions d'ambiances humides

(30) Priorität: 10.10.1991 DE 9112616 U
(43) Veröffentlichungstag der Anmeldung: 14.04.1993
(73) Patentinhaber: Maschinenbau Heinrich Hajek GmbH & Co, A-6901 Bregenz (AT)
(72) Erfinder: Breuss, Walter, W-8990 Heimenkirch (DE); Wolf, Erwin, W-8999 Heimenkirch (DE)
(74) Vertreter: Riebling, Peter, Dr.-Ing., Patentanwalt

(56) Entgegenhaltungen:
- EP-A- 0 114 155
- EP-A- 0 122 573
- CH-A- 657 827
- FR-A- 2 663 309
- US-A- 3 511 358

## Beschreibung

Die vorliegende Erfindung betrifft eine Fördervorrichtung für den Transport von Produkten unter Feuchtraumbedingungen, insbesondere von geschnittenem Nahrungsmittelgut, bestehend aus einem Gestell in dem einander gegenüberliegend jeweils drei Walzen angeordnet sind, über welche ein als geschlossenes Band ausgebildetes Förderband geführt ist.

Derartige Fördervorrichtungen sind in der Nahrungsmittelindustrie in der Form bekannt geworden, daß an der einen Seite eines rohr- oder stangenförmigen Gestells eine Antriebseinheit angesetzt ist, die im wesentlichen aus einem Antriebsmotor, einem Getriebe und einem Antriebsriemen besteht, der über eine Antriebswelle läuft.

Als Stand der Technik ist es aus der EP 0 122 573 bekannt, die Walzen an den freien Enden von Endstücken drehbar zu lagern und die Endstücke ebenfalls leicht lösbar mit dem Gestell zu verbinden, wobei allerdings die Endstücke mit entsprechenden Geradführungen in entsprechende Gestellaufnahmen eingeschoben sind. Es handelt sich also um eine Schiebeverbindung, die nicht leicht zu demontieren ist.

Bei der genannten Anordnung besteht der Nachteil, daß eine reine Schiebeführung der Endstücke in den zugeordneten Gestellteilen vorhanden ist, die zunächst stark verschmutzungsanfällig ist. Außerdem muß diese Schiebeführung mit entsprechenden Spannmitteln, wie z.B. Schrauben oder Klemmeinrichtungen, gespannt werden, und zum Auswechseln eines Bandes muß die Schiebeführung um einen bestimmten Weg einwärts in Längsrichtung des Bandes verschoben werden, um das Band zu entspannen.

Man muß dann die Walzen von den Endstücken abschrauben und aus dem umgreifenden Transportband herausziehen, wonach dann erst das Transportband auswechselbar ist. Damit besteht der wesentliche Nachteil, daß es sich nicht um eine schnelle Auswechselbarkeit eines Transportbandes handelt, sondern es ist ein relativ komplizierter Vorgang, weil die Walzen während der Demontage des Transportbandes von dem Transportband umschlungen werden.

Im übrigen ist die gesamte Spanneinrichtung ständig von der Spannung des Transportbandes belastet, was mit der Gefahr verbunden ist, daß bei einem unbeabsichtigten Lösen der Spanneinrichtung das Transportband an Spannung verliert.

Nach der genannten EP 0 122 573 ist das Band über Unterstützungsholme geführt, die allerdings nicht leicht demontierbar an dem Transportgestell ausgebildet sind. Damit besteht der Nachteil, daß zwar stirnseitig die Walzen demontierbar sind - durch die Montage der beschriebenen Spanneinrichtungen -, daß man aber die Bandführung im Mittelteil des Transportgestells nur unter hohem Aufwand demontieren kann.

Der Erfindung liegt deshalb die Aufgabe zugrunde, eine Fördervorrichtung der eingangs genannten Art zu schaffen, die besonders strengen Anforderungen der Nahrungsmittelindustrie genügen soll, indem eine möglichst einfache, sehr gründliche Reinigung des gesamten Förderers ermöglicht werden soll. Hierzu ist erforderlich, daß der Förderer selbst wenig Ecken und Kanten bietet, in denen sich Reste festsetzen können, und daß für die sehr häufig erforderliche Reinigung das Förderband auf einfache Weise und schnell abgenommen werden kann.

Diese gestellte Aufgabe wird erfindungsgemäß durch die Merkmale des kennzeichnenden Teils von Anspruch 1 gelöst.

Wesentlich hierbei ist, daß das Gestell aus Rohrstücken zusammengesetzt ist und die Endstücke außer dem die angetriebene Walze antriebsseitig lagernden Endstück hochschwenkbar ausgebildet sind und zumindest die Endstücke an der Seite der nicht angetriebenen Walze in hochgeschwenktem Zustand leicht abnehmbar mit dem Gestell verbunden sind.

Das eine Endstück-Paar lagert hierbei die Umlenkwalze für das Band an der einen Seite der Fördervorrichtung, während das andere Endstück-Paar die Antriebseinheit trägt.

Hierdurch ergibt sich der wesentliche Vorteil, daß damit das Band leicht auswechselbar ausgebildet ist, so daß es leicht zu reinigen ist.

Zum Reinigen des Bandes, was vorzugsweise im täglichen Turnus vorgenommen wird, wird einfach das eine Endstück-Paar mit der Umlenkwalze hochgeschwenkt und/oder abgenommen, wodurch das Band an dieser Seite frei wird.

Damit ergibt sich der wesentliche Vorteil, daß zur Änderung der Transportlänge nun einfach die Endstücke der einen Seite abgenommen werden können und der Mittelteil der Fördervorrichtung, bestehend aus den einzelnen Profilrohren, durch andersartige, eine andere Länge aufweisende Profilrohre ersetzt wird, wonach dann auf diese Anordnung wieder die beiden Endstücke aufgesteckt werden.

Es ist dann lediglich erforderlich, ein entsprechendes Förderband in angepaßter Länge einzulegen, um eine Fördervorrichtung mit anderer Transportlänge zu erhalten.

Um das Band an der Antriebsseite aus dem Profilrohrgestell herausnehmen zu können, ist vorgesehen, daß mindestens die eine Seite des Endstück-Paares, an dem die Antriebseinheit sitzt, leicht lösbar mit dem Rohrgestell verbunden ist und hochklappbar ausgebildet ist.

Damit kann die eine Seite des Endstück-Paares hochgeklappt werden, wodurch durch die entstehende Lücke hindurch das Transportband entnommen werden kann.

Mit dieser Ausgestaltung wird es möglich, daß beim Auswechseln des Bandes zunächst die Spannung des Bandes beseitigt wird, indem das Endstück-Paar mit der Umlenkwalze hochgeklappt wird, wodurch es dann leicht aus der Gelenkkupplung mit dem Endstück herausgezogen werden kann. Der feste Teil des Endstückes ist hierbei mittels einer Steckverbindung oder einer Schraubverbindung mit der Fördervorrichtung verbunden.

Insgesamt ergibt sich also mit der erfindungsgemäßen Ausbildung einer Fördervorrichtung der Vorteil, daß man zum Zweck der Reparatur oder Reinigung das Band leicht auswechseln kann, und im übrigen ergibt sich der Vorteil, daß man die Transportlänge der Fördervorrichtung leicht verändern kann, so daß man eine derartige Anlage an verschiedene Anwendungsfälle anpassen kann.

Im folgenden wird die Erfindung anhand von mehrere Ausführungswege darstellenden Zeichnungen näher erläutert. Hierbei gehen aus den Zeichnungen und ihrer Beschreibung die Merkmale und Vorteile der Erfindung hervor.

Es zeigt:
- Figur 1:: ein Gestell nach der Erfindung, wobei die einzelnen Rohrstücke über flüssigkeitsdichte Steckverbindungen miteinander verbunden sind,
- Figur 2:: das Gestell nach Figur 1 in der Entnahmestellung des Transportbandes mit hochgeschwenkten und gelösten Endstücken,
- Figur 3:: einen Schnitt durch die linke Umlenkseite des Gestells nach Figur 1,

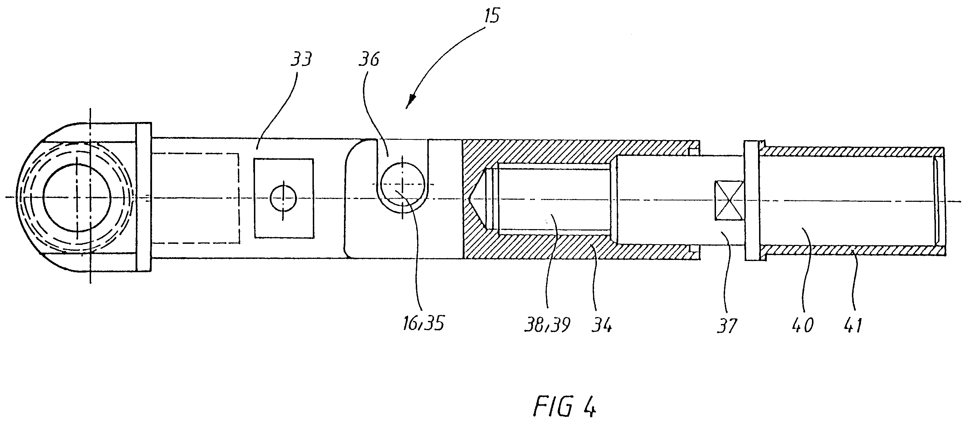

- Figur 4:: die Draufsicht in Richtung des Pfeiles IV in Figur 3 mit teilweisem Schnitt,
- Figur 5:: den Schnitt durch die rechte Umlenkseite des Gestells,
- Figur 6:: die Seitenansicht in Richtung des Pfeiles VI in Figur 5,
- Figur 7:: eine zweite Ausführungsform eines Gestells mit Schraubverbindungen,
- Figur 8:: die Seitenansicht mit teilweisem Schnitt in Richtung des Pfeiles VIII in Figur 7,
- Figur 9:: das Gestell nach Figur 7 in der Entnahmeposition des Transportbandes.

Die Fördervorrichtung nach der Erfindungbesteht im wesentlichen aus einem Profilrohrgestell 31, welches als reines Steckprofil aus rundprofilierten Rohren zusammengesetzt ist, wobei einzelne Rohrstücke 11 über Steckverbindungen und zugehörende T-Stücke 12 miteinander verbunden sind.

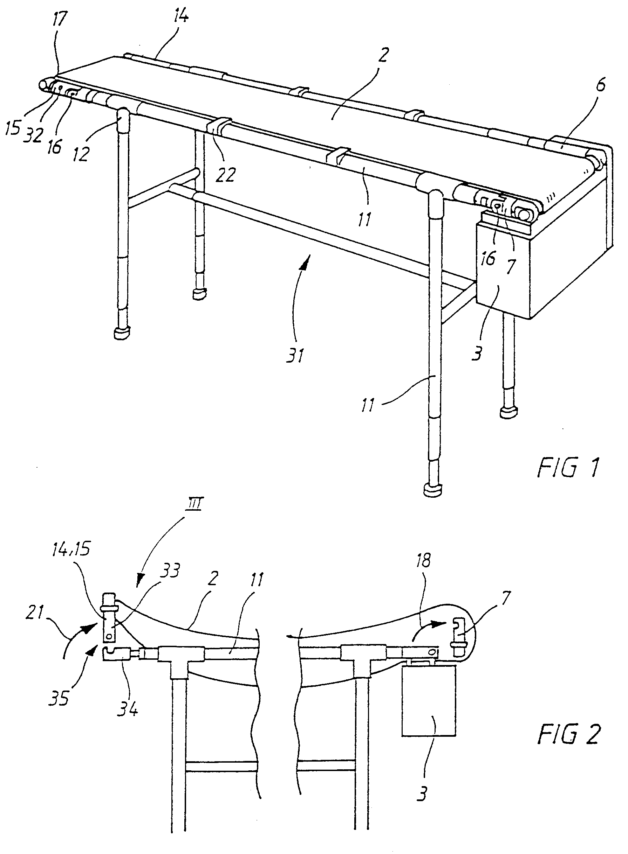

Das Förderband 2 ist über zwei Walzen 5,17 als endloses Band geführt, wobei die Walze 17 an den freien Enden eines Endstück-Paares 14,15 drehbar gelagert ist und jedes Endstück 14,15 im Bereich einer Schwenkachse 16 hochschwenkbar in Pfeilrichtung 21 (Figur 2) ausgebildet ist.

Auf diese Weise können gemäß Figur 2 die Endstücke 14,15 hochgeschwenkt werden, und das Förderband 2 wird dadurch lose, wodurch die Reinigung des Gestells 1 erleichtert wird.

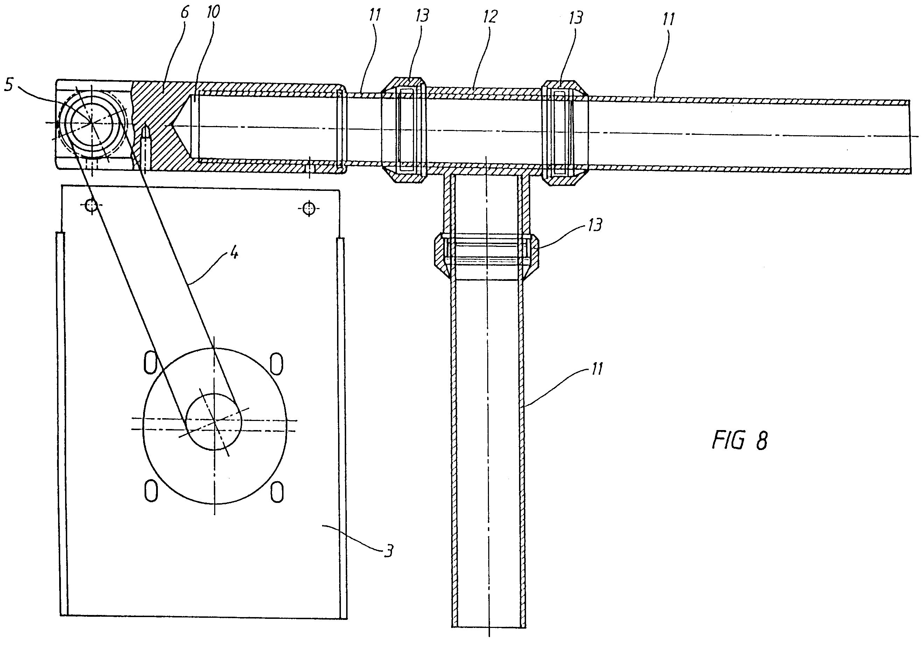

Auf der gegenüberliegenden Seite des Gestells ist eine Antriebseinheit 3 angeordnet, die im wesentlichen aus einem Gehäuse besteht, in dem der Antriebsmotor angeordnet ist. Er treibt über einen Treibriemen 4 die Walze 5 an, über welche das Förderband 2 läuft (Figur 8).

Die gesamte Antriebseinheit 3 ist ebenfalls leicht lösbar mit dem Gestell 1 verbunden, indem die gesamte Antriebseinheit 3 an Endstücken 6,7 befestigt ist.

Am Gestell 1 sind Führungen 22 vorgesehen, um das Förderband 2 im Gestell zu unterstützen. Diese Führungen sind leicht steckbar auf den Rohrstücken 11 befestigt. Sie sind als Schellen ausgebildet und übergreifen mit ihren nach unten offenen U-Profilen kraft- und formschlüssig die Rohrstücke 11.

Wichtig bei der vorliegenden Ausführungsform ist, daß die Endstücke 14,15 mittels Gelenkkupplungen 35 lösbar an den Festteilen dieser Endstücke befestigt sind. Jede Gelenkkupplung besteht also aus einem Schwenkteil 33, welches schwenkbar und steckbar in einem Festteil aufgenommen ist. Damit ergibt sich der Vorteil, daß der Schwenkteil des jeweiligen Endstückes hochschwenkbar ist, womit das Transportband entspannt wird.

Um das Transportband dann entfernen zu können, werden die linksseitigen Endstücke aus der Gelenkkupplung herausgezogen und nehmen somit die Stellung nach Figur 2 ein. Das Transportband kann dann zu den linksseitig entfernten Endstücken abgenommen werden, weil die Endstücke mit der Walze als Ganzes aus dem Transportband entfernt werden.

Die rechte Seite des Transportbandes wird dadurch gelöst, daß lediglich das Endstück 7 eine gleiche Gelenkkupplung 35 bildet, wie es anhand der linksseitigen Endstücke 14,15 beschrieben wurde. Auch hier wird das Schwenkteil in der Gelenkkupplung hochgeschwenkt, und dieses Schwenkteil kann dann aus der Schwenkachse 16 entfernt werden, wobei die Schwenkrichtung des Schwenkteiles gegenüber der Schenkrichtung der linksseitigen Endstücke 14 und 15 umgekehrt ist.

Wichtig hierbei ist, daß die Antriebsseite, welche dem Endstück 6 zugordnet ist, unverändert bleiben kann, d.h. das Endstück 6 braucht nicht aus seinem Steck- oder Schraubverbund mit dem Rohrgestell entfernt zu werden. Es reicht also aus, lediglich das rechtseitige Enstück 7 hochzuschwenken in der Art, wie es in Figur 2 dargestellt ist, um das Transportband dann durch die sich ergebende Lücke 20 zu entfernen.

Dies ist vorteilhaft deshalb, weil die relativ schwere Antriebseinheit 3 dann am Gestell 1 verbleiben kann, ohne daß die Notwendigkeit besteht, diese Antriebseinheit 3 mit dem Förderband selbst zu entfernen.

Soll die Transportlänge der Fördervorrichtung verändert werden, dann ist dies auf besonders einfache Weise möglich.

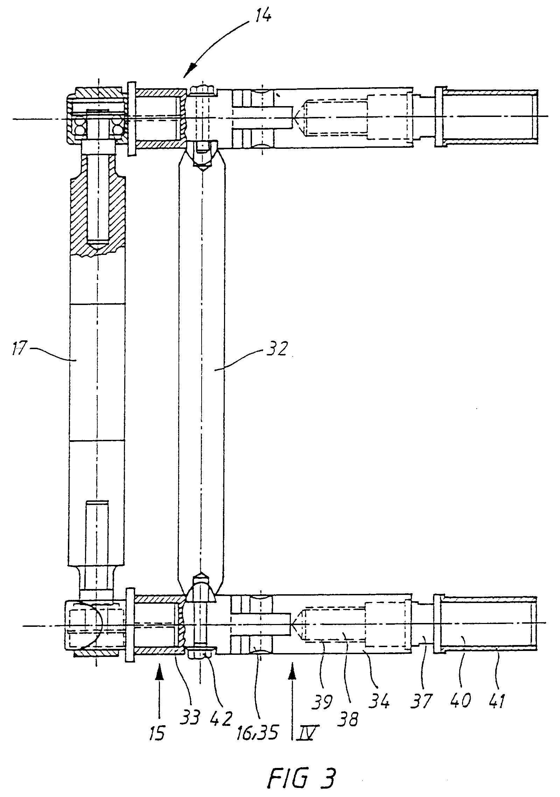

In der vorher beschriebenen Weise wird zunächst das Förderband 2 aus dem Gestell entnommen, und gleichzeitig werden die in horizontaler Richtung liegenden Rohrstücke 11 durch Lösen der Verschraubungen 13 im Bereich der T-Stücke 12 entfernt und durch eine andere Länge aufweisende Rohrstücke 11 ersetzt. Das Gestell kann somit problemlos in der Länge (und auch in der Höhe) verändert werden. Entsprechend der neuen Länge des Gestells wird dann ein daran angepaßtes Förderband in der in Figur 3 gezeigten Weise eingelegt, und das Gestell wird dann geschlossen, wie es in Figuren 1 in fertigem Zustand dargestellt ist.

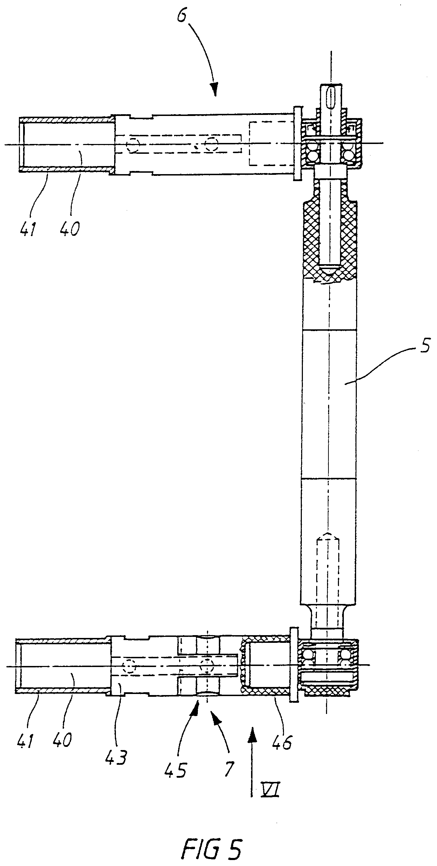

Gemäß Figuren 3 und 5 besteht das linksseitige Ende des Fördergestells im wesentlichen aus einem Verbindungsteil 37, welches einen Zapfen 40 aufweist, der in eine Dichtungshülse 41 eingesteckt ist. Um einen flüssigkeitsdichten Abschluß in der offenen Aufnahme des Rohrstückes 11 zu gewährleisten, ist vorgesehen, daß zunächst die Dichtungshülse 41 in die offene Stirnseite des Rohrstückes 11, und dann passend der Zapfen 40 in die Dichtungshülse eingetrieben werden. Es kommt somit zu einem vollständig flüssigkeitsdichten Abschluß des Verbindungsteils 37 in dem stirnseitig offenen Rohrstück 11.

Auf der anderen Seite weist das Verbindungsteil 37 einen Gewindezapfen 38 auf, der in eine zugeordnete Gewindebohrung 39 im Bereich der Endstücke 14,15 eingreift. Nachdem gemäß Figur 3 die Endstücke 14 und 15 genau gleich ausgebildet sind, genügt es für die weitere Beschreibung, die Funktion des Endstückes 15 zu beschreiben.

Das Endstück 15 besteht im wesentlichen aus einem Schwenkteil 33 und einem Festteil 34, welche über eine Gelenkkupplung 35 miteinander verbunden sind. Die Gelenkkupplung 35 ist durch eine Schwenkachse 16 definiert.

Das Schwenkteil 33 trägt die Walze 17 über entsprechende Drehlager, wobei zur Verbindung der beiden Endstücke 14,15 eine querverlaufende Traverse 32 vorgesehen ist, die mit Schrauben 42 im jeweiligen Schwenkteil 33 des Endstückes 14,15 befestigt ist.

Die Gelenkkupplung 35 wird im wesentlichen gebildet durch eine nach oben geöffnete, etwa U-förmig profilierte Ausnehmung 36, in welche eine Welle eingreift, welche die Schwenkachse 16 bildet. Das Schwenkteil 33 ist mit der genannten Welle fest verbunden. Das Schwenkteil 33 kann somit im Bereich der Ausnehmung 36 nach oben in Pfeilrichtung 21 verschwenkt werden, und gleichzeitig kann die Welle aus der nach oben geöffneten Ausnehmung (die in dem Festteil 34 angeordnet ist) entnommen werden.

Um kleine Fluchtungsfehler auszugleichen, ist es vorgesehen, daß das gesamte Festteil 34 mit seiner Gewindebohrung 39 auf dem Gewindezapfen 38 drehbar ist, um so eine axiale Verstellung des Festteils 34 zu gewährleisten.

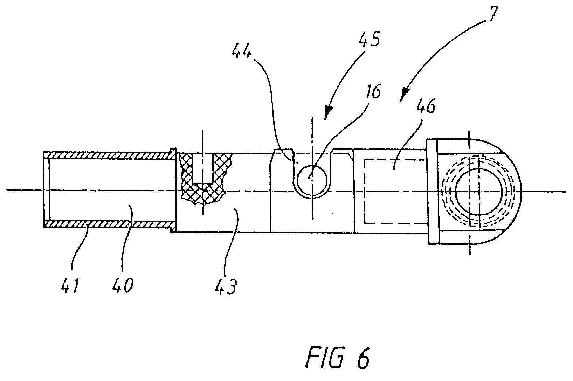

In den Figuren 5 und 6 ist die rechte Seite des Gestells mit den Endstücken 6 und 7 dargestellt.

In ähnlicher Weise ist hierbei das Endstück 7 mit einer Gelenkkupplung 55 an dem Festteil 43 schwenkbar gelagert, wobei das Festteil 43 wiederum einen Zapfen 40 aufweist, der von einer Dichtungshülse 41 umgeben ist, wodurch ein flüssigkeitsdichter Anschluß an die offene Stirnseite des Rohrstücks 11 gegeben ist.

Der Schwenkteil 46 ist über ein Lager mit der Walze 5 verbunden. Das Endstück 7 ist in der vorher beschriebenen Weise in Pfeilrichtung 18 von dem festen Teil 43 abnehmbar, wobei eine nach unten geöffnete Ausnehmung 45 vorhanden ist, in welche die Welle mit der Schwenkachse 16 eingreift.

Das Endstück 6 ist unschwenkbar über die beschriebene Steckverbindung mit dem Rohrstück 11 verbunden.

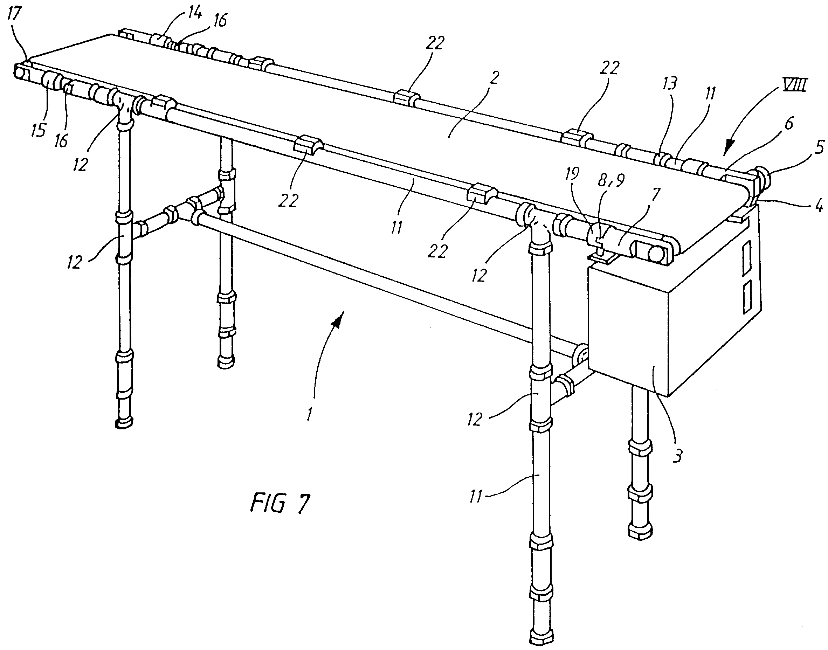

Nach der in den Figuren 7 bis 9 dargestellten zweiten Ausführungsform eines Gestells sind einzelne Rohrstücke 11 des Profilrohrgestells 1 über Verschraubungen 13 und zugehörige T-Stücke miteinander zusammengesetzt.

Hierbei sind die Verschraubungen 13 flüssigkeitsdicht ausgebildet, wodurch beim Reinigen des Gestells 1, z.B. mit einem Hochdruckstrahl vermieden wird, daß Reinigungsflüssigkeit in das Gestell hineingelangt und dort zu unerwünschten Flüssigkeitsansammlungen führt.

Bei dieser Ausführungsform ist das eine Endstück 6 als Schiebemuffe ausgebildet und weist gemäß Figur 8 eine Ausnehmung 10 auf, in welche das Rohrstück 11 des Gestells eingreift.

Das Endstück 7 ist in seinem Verbindungsbereich zu dem Gestell 1 leicht lösbar ausgebildet.

Es ist hierbei als Steckmuffe ausgebildet und weist einen an der einen Seite angeordneten Zapfen 8 auf, der in eine zugeordnete Ausnehmung 9 im Bereich der Anschlußmuffe 19 des Gestells 1 eingreift.

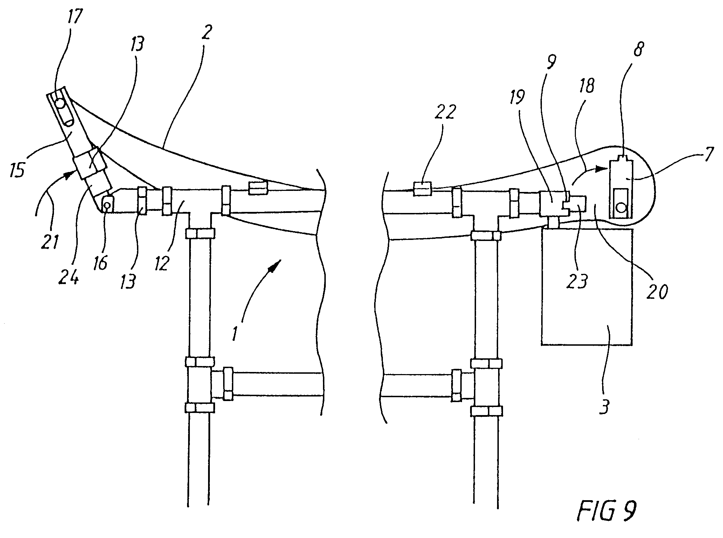

Die Anschlußmuffe 19 ist seitlich nach vorne verlängert und bildet dort einen Muffenteil 23 (Figur 9), um eine Seitenführung für das Endstück 7 in der Eingriffslage in der Anschlußmuffe 19 zu gewährleisten.

Das Endstück 7 ist im übrigen in der Drehachse der Walze 5 drehbar gelagert, so daß zum Entnehmen des Förderbandes 2 auf der Antriebsseite 3 das Endstück 7 in Pfeilrichtung 18 nach oben verschwenkt wird, wodurch einen Lücke 20 zwischen der Anschlußmuffe 19 und dem hochgeschwenkten Endstück 7 gemäß Figur 9 frei wird.

## Patentansprüche

1. Fördervorrichtung für den Transport von Produkten unter Feuchtraumbedingungen, insbesondere von geschnittenem Nahrungsmittelgut, bestehend aus einem Gestell (1), an dem gegenüberliegend an den jeweiligen Gestellenden Walzen (5,17) in mit dem Gestell verbundenen Endstücken (6,7; 14,15) drehbar gelagert sind, über welche ein endloses Förderband (2) geführt ist, wobei eine dieser Walzen (5) angetrieben ist, dadurch gekennzeichnet, daß das Gestell (1) aus Rohrstücken zusammengesetzt ist und die Endstücke (7; 14,15) außer dem die angetriebene Walze (5) antriebsseitig lagernden Endstück (6) hochschwenkbar ausgebildet sind und zumindest die Endstücke (14,15) an der Seite der nicht angetriebenen Walze (17) in hochgeschwenktem Zustand leicht abnehmbar mit dem Gestell (1) verbunden sind.

2. Fördervorrichtung nach Anspruch 1, dadurch gekennzeichnet, daß die Rohrstücke (11) des Gestells (1) über Verschraubungen (13) miteinander verbunden sind.

3. Fördervorrichtung nach Anspruch 1 und 2, dadurch gekennzeichnet, daß das Gestell (1) aus senkrechten und waagrechten Rohrstücken (11) besteht, die über steckbare T-Stücke (12) miteinander verbunden sind.

4. Fördervorrichtung nach einem der Ansprüche 1 - 3, dadurch gekennzeichnet, daß die Verschraubungen (13) und die Steckverbindungen flüssigkeitsdicht ausgebildet sind.

## Claims

1. A conveying device for the transportation of products under humid room conditions, in particular for the transportation of cut foodstuffs, consisting of a frame (1) on which rollers (5, 17), lying opposite at the respective ends of the frame, are rotatably mounted in end pieces (6, 7; 14, 15) connected with the frame, over which an endless conveyor belt (2) is guided, with one of these rollers (5) being driven, characterised in that the frame (1) is composed of tube pieces and the end pieces (7; 14, 15), apart from the end piece (6) bearing the driven roller (5) on the drive side, are constructed so as to be able to be swung up and at least the end pieces (14, 15) on the side of the non-driven roller (17) in swung up state are connected with the frame (1) so as to be easily removable.

2. A conveying device according to Claim 1, characterised in that the tube pieces (11) of the frame (1) are connected with each other via screw joints (13).

3. A conveying device according to Claim 1 and 2, characterised in that the frame (1) consists of vertical and horizontal tube pieces (11) which are connected with each other via insertable T-pieces (12).

4. A conveying device according to one of Claims 1 - 3, characterised in that the screw joints (13) and the plug connections are constructed so as to be fluid-tight.

## Revendications

1. Dispositif convoyeur pour le transport de produits dans des conditions humides, en particulier de produits alimentaires coupés, formé d'un bâti (1) aux extrémités duquel sont montés en rotation, l'un en face de l'autre, dans des éléments d'extrémité (6, 7 ; 14, 15) reliés au bâti, des rouleaux (5, 17) sur lesquels est guidée une bande transporteuse sans fin (2), l'un de ces rouleaux (5) étant entraîné, caractérisé en ce que le bâti (1) est formé d'éléments tubulaires et les éléments d'extrémité (7 ; 14, 15) autres que l'élément d'extrémité (6) qui reçoit le rouleau entraîné (5), côté entraînement, sont conçus pour pouvoir être relevés par pivotement et au moins les éléments d'extrémité (14, 15) situés du côté du rouleau non entraîné (17) sont reliés au bâti (1) pour pouvoir être enlevés facilement en position relevée.

2. Dispositif convoyeur selon la revendication 1, caractérisé en ce que les éléments tubulaires (11) du bâti (1) sont reliés entre eux pas des vissages (13).

3. Dispositif convoyeur selon les revendications 1 et 2, caractérisé en ce que le bâti (1) se compose d'éléments tubulaires (11) verticaux et horizontaux qui sont reliés entre eux par des éléments en T enfichables (12).

4. Dispositif convoyeur selon l'une des revendications 1 à 3, caractérisé en ce que les vissages (13) et les liaisons enfichables sont conçus pour être étanches au liquide.
